# FASCICULE DE BREVET EUROPEEN

(11) **EP 2 780 386 B1**
(45) Date de publication et mention de la délivrance du brevet: **02.08.2017**
(21) Numéro de dépôt: 12794404.9
(22) Date de dépôt: 30.10.2012
(51) Int. Cl.: C08G 18/28, C08G 18/48, C09D 7/00

(54) **ÉPAISSISSANTS NON IONIQUES ASSOCIATIFS CONTENANT DES ALKYLS CYCLOHEXYLOLS ALKOXYLES, LEURS UTILISATIONS ET FORMULATIONS LES CONTENANT**
NICHTIONISCHE ASSOZIATIVE VERDICKUNGSMITTEL MIT ALKOXYLIERTEN CYCLOHEXYLOLALKYLEN, VERWENDUNGEN DAVON UND FORMULIERUNGEN DAMIT
NONIONIC ASSOCIATIVE THICKENERS CONTAINING ALKOXYLATED CYCLOHEXYLOL ALKYLS, USES THEREOF AND FORMULATIONS CONTAINING SAME

(30) Priorité: 18.11.2011 FR 1103521
(43) Date de publication de la demande: 24.09.2014
(73) Titulaire: COATEX, 69730 Genay (FR)
(72) Inventeur: SUAU, Jean-Marc, F-69480 Lucenay (FR); RUHLMANN, Denis, F-69730 Genay (FR)
(74) Mandataire: Balmefrezol, Ludovic Francis Pierre
(86) Numéro de dépôt international: PCT/FR2012/052503
(87) Numéro de publication internationale: WO 2013/072592

(56) Documents cités:
- EP-A1- 2 327 732
- EP-A1- 2 361 939
- EP-A2- 1 566 393
- WO-A1-99/11594

## Description

La présente invention concerne de nouveaux épaississants associatifs appartenant à la catégorie des HEUR (Uréthane oxyde d'Ethylène modifiés Hydrophobiquement ou Hydrophobically modified Ethylene oxyde URethane). Ces produits contiennent un monomère associatif original à base d'alkyl cyclohexylols alkoxylés. Leur pouvoir épaississant est égal ou supérieur à celui procuré par les épaississants associatifs HEUR de l'art antérieur contenant des alkyls phénols greffés. On dispose donc d'un produit de substitution efficace et exempt d'alkyls phénols, ce qui correspond à la demande actuelle du marché.

Les formulations de peintures aqueuses contenant des charges minérales sont constituées d'une phase aqueuse, d'un ou plusieurs polymères en émulsion dans la phase liquide dénommés liants, de charges et/ou de pigments, d'un agent dispersant et d'adjuvants aussi divers que des tensio-actifs, des agents de coalescence, des biocides, des anti-mousses et enfin, d'au moins un agent épaississant.

Ce dernier permet de maîtriser la rhéologie des formulations aqueuses dans lesquelles il est introduit, et notamment des peintures aqueuses, tant au stade de leur fabrication, que pendant leur transport, leur stockage ou au cours de leur mise en oeuvre. La diversité des contraintes pratiques au niveau de chacune de ces étapes renvoie à une multiplicité de comportements rhéologiques différents.

On peut néanmoins résumer le besoin de l'homme du métier à l'obtention d'un effet d'épaississement de la formulation aqueuse, tant pour des raisons de stabilité au cours du temps, que pour une possible application de la peinture sur une surface verticale, l'absence d'éclaboussures au moment de la mise en oeuvre, etc... C'est pourquoi on a désigné les additifs qui contribuent à cette régulation du comportement rhéologique sous le terme d'épaississants.

Parmi ces produits, on distingue les épaississants dits « associatifs » qui sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu.

Le mécanisme de fonctionnement et les caractéristiques des épaississants associatifs sont aujourd'hui bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp 423-442).

Parmi ces épaississants associatifs, on distingue la classe des épaississants associatifs de type HEUR (Uréthane oxyde d'Ethylène modifiés Hydrophobiquement ou Hydrophobically modified Ethylene oxyde URethane selon l'acronyme anglo-saxon approprié). Ils désignent des copolymères résultant de la synthèse entre un composé du type polyalkylène glycol, un polyisocyanate, et un monomère ou condensat dit « associatif » du type alkyle, aryle ou aryalkyle constitué d'un groupe terminal hydrophobe.

Ces structures sont bien connues pour développer des viscosités élevées, pour un gradient de cisaillement moyen à faible (J. of Applied Polymer Science, vol. 58, p 209-230, 1995 ; Polymeric Mat. Sci. and Engineering, vol. 59, p 1033, 1988 ; Polymeric Mat. Sci. and Engineering, vol. 61, p 533, 1989 ; Polymeric Paint Colour Journal, vol. 176, n° 4169, p 459, June 1986), ce qui correspond respectivement aux mesures des viscosités Stormer™ (KU) et Brookfield™ (mPa.s).

Parallèlement, le document EP 1 566 393 décrit un épaississant de type HEUR dont une des caractéristiques essentielles est la présence de n-butyl-1-octanol, alors que ses groupements hydrophobes sont à base d'alcools gras ayant de 8 à 18 atomes de carbone.

Le document EP 1 013 264 décrit un épaississant polyuréthane pour des formulations cosmétiques, disposant d'un monomère associatif fonctionnalisé par un groupement hydrophobe pouvant être linéaire ou branché, mais préférentiellement linéaire et possédant de 12 à 24 atomes de carbone.

Le document WO 94/06840 propose un épaississant associatif de type HEUR, caractérisé par une certaine densité de groupements hydrophobes, lesdits groupements étant des chaînes alkyles linéaires ayant de 8 à 22 atomes de carbone.

Le document EP 1 584 331 propose un groupement terminal hydrophobe ayant de 6 à 34 atomes de carbone pour le monomère associatif. Pour augmenter spécifiquement la viscosité Brookfield™.

Le document EP 0 639 595 propose des groupements hydrophobes linéaires ayant de 4 à 36 atomes de carbone.

Le document WO 02/102868 fait référence lui aussi à des structures linéaires pour le monomère associatif. Le document EP 2 361 939 A1 décrit des agents épaississants utilisés dans des formulations aqueuses. L'exemple 1 décrit la réaction entre un polyétherdiol (PEG 8000), IPDI et le cardanol éthoxylé, lequel est un alkyl phénol éthoxylé. L'exemple 2 décrit la réaction entre un polyétherdiol (PEG 8000), IPDI et du nonyl phénol éthoxylé. Indépendamment des profils rhéologiques particuliers apportés par les variations décrites ci-dessus, les HEUR dont le pouvoir épaississant est le plus marqué demeurent encore des molécules disposant d'alkyls phénols greffés sur leur monomère associatif. Un des produits représentatifs de cette technologie est l'Acrysol™ SCT-275 développé par la société DOW™. Or, les alkyls phénols sont aujourd'hui largement suspectés d'être cancérigènes et dangereux pour la reproduction ; encore tolérés dans l'industrie des peintures, ils n'en demeurent pas moins dans le collimateur des institutions législatives, notamment européennes.

Il existe donc un véritable besoin de mettre au point un épaississant associatif de type HEUR, exempt d'alkyls phénols, mais avec un pouvoir épaississant conservé voir même amélioré.

Poursuivant ses recherches dans ce sens, la Demanderesse a constaté de manière tout à fait surprenante que l'emploi de certaines structures en lieu et place du monomère associatif, conduisaient à un tel résultat. Cette avancée technologique repose sur la mise en oeuvre, comme monomère associatif, d'un composé dont la structure répond à la formule (I) : 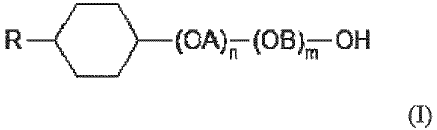 où :
- m et n sont des entiers inférieurs à 150 dont au moins un est non nul,
- A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
- R désigne un groupement alkyle, linéaire ou ramifié contenant de 8 à 20 atomes de carbone, préférentiellement un groupement alkyle linéaire ayant de 9 à 12 atomes de carbone.

De tels composés ont été identifiés en tant qu'agents tensio-actifs et sont obtenus par alkoxylation d'un alkyl phénol et hydrogénation du produit obtenu. On pourra notamment se reporter au document US 6 111 146 qui décrit leur synthèse. Les composés résultants sont désignés sous l'expression d'« alkyls cyclohexylolsalkoxylés». Il est important d'ajouter que la structure finale n'est pas celle d'un alkyl phénol, et que le produit résultant ne sera pas catégorisé comme tel.

Les épaississants associatifs qui résultent de la polymérisation de ce monomère de formule (I), d'au moins un polylakylène glycol et d'au moins un polyisocyanate sont donc dénués d'alkyls phénols ; de manière inattendue et particulièrement avantageuse, ils permettent d'épaissir une peinture aqueuse à un niveau de viscosité au moins égal à celui offert par des HEUR de l'art antérieur contenant des alkyl phénols. On démontre même qu'on peut obtenir pour l'invention un profil rhéologique similaire à celui proposé par les produits de l'état de la technique aux alkyl phénols. On est donc parvenu à mettre au point un produit au moins équivalent, en s'affranchissant de la problématique liée à l'emploi d'alkyl phénols.

Aussi, un premier objet de l'invention consiste en des polyuréthanes hydrosolubles résultant de la condensation ;
a) d'au moins un polyalkylène glycol,
b) d'au moins un polyisocyanate, et
c) d'au moins un monomère de formule (I) : 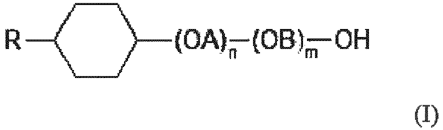 où :
   - m et n sont des entiers inférieurs à 150 dont au moins un est non nul,
   - A et B désignent des groupes alkyles différents l'un de l'autre, et ayant de 2 à 4 atomes de carbone, le groupement AO désignant préférentiellement l'oxyde d'éthylène et le groupement BO désignant préférentiellement l'oxyde de propylène,
   - R désigne un groupement alkyle, linéaire ou ramifié contenant de 8 à 20 atomes de carbone, préférentiellement un groupement alkyle linéaire ayant de 9 à 12 atomes de carbone.

Par « polyalkylène glycol », on entend un polymère d'un alkylène glycol dérivé d'un oxyde oléfinique. Le polyalkylène glycol selon la présente invention est par exemple le polyéthylène glycol, le polypropylène glycol, le polybutylène glycol ou un polyalkylène glycol renfermant une proportion de groupe éthylène-oxy et /ou une proportion de groupe propylène-oxy et/ou une proportion de groupe butylène-oxy. Le polyalkylène glycol selon la présente invention peut par exemple comprendre une proportion dominante de groupe éthylène-oxy en association avec une proportion secondaire de groupe propylène-oxy. Des exemples spécifiques de polymère alkylène glycol comprennent : les polyalkylènes glycols ayant un poids moléculaire moyen de 1 000, 4 000, 6000, 10 000 et 20 000 g/mol (dans le cas du polyéthylène glycol appelés PEG-1 000, PEG-4 000, PEG-6 000, PEG 10 000, PEG 20 000) ; les polyéthylène polypropylène glycols ayant un pourcentage d'oxyde d'éthylène compris entre 20 et 80 % en poids et un pourcentage d'oxyde de propylène compris entre 20 et 80 % en poids.

Par « polyisocyanate », on entend un composé qui comprend au moins 2 groupes fonctionnels isocyanate -N=C=O.

La Demanderesse précise que la fabrication de ces polyuréthanes, qui appartiennent à la famille des épaississants de type HEUR, est connue de l'homme du métier, qui pourra se reporter à l'enseignement des documents cités auparavant dans l'arrière plan technologique de la présente invention.

Selon un mode de réalisation de la présente invention, ces polyuréthanes résultent de la condensation de, exprimé en % en poids de chacun des monomères, la somme de ces % étant égale à 100 % :
a) de 90 % à 99,5 % d'au moins un polyalkylène glycol,
b) de 0,5 % à 10 % d'au moins un polyisocyanate, et
c) de 90 % à 99,5 % d'au moins un monomère de formule (I).

Selon un mode de réalisation de la présente invention, le polylakylène glycol constitutif du polyuréthane est le polyéthylène glycol.

Selon un autre mode de réalisation de la présente invention, il s'agit d'un polyéthylène glycol de masse moléculaire en poids comprise entre 2 000 g/mole et 20 000 g/mole, par exemple entre 8 000 g/mole et 15 000 g/mole, ou par exemple entre 8 000 g/mole et 12 000 g/mole.

Selon un mode de réalisation, le polyisocyanate constitutif du polyuréthane selon l'invention est choisi parmi le toluène diisocyanate et ses dimères et trimères, le 1,4-butane di-isocyanate, le 1,6-hexane diisocyanate, l'isophorone diisocyanate, le 1,3- et le 1,4- cyclohexane diisocyanate, le 4,4'diisocyanatodicyclohexylmethane, le 1-méthyl-2,4-diisocyanatocyclohexane et son mélange avec le 1-méthyl-2,6-diisocyanatocyclohexane, le biuret de l'hexaméthylène diisocyanate et ses dimères et trimères et leurs mélanges.

Un second objet de la présente invention consiste en des compositions aqueuses contenant de l'eau, au moins un polyuréthane selon l'invention, ainsi qu'au moins un tensio-actif, et éventuellement au moins un additif choisi parmi un biocide, un solvant, un anti-mousse, un régulateur de pH, un agent de coalescence ou leurs mélanges.

Par « biocide », on entend une substance chimique destinée à détruire, repousser ou rendre inoffensifs les organismes nuisibles, à en prévenir l'action ou à les combattre de toute autre manière, par une action chimique ou biologique.

Par « tensioactif » ou « agent tensioactif », on entend une molécule non ionique constituée d'au moins une partie hydrophile et d'au moins une partie hydrophobe.

Par « agent anti-mousse », on entend une substance ou une formulation destinée à détruire les bulles d'air au sein d'un milieu liquide homogène ou hétérogène (ou à sa surface) ou à prévenir leur formation.

Par « régulateur de pH » ou « agent régulateur de pH », on entend un composé chimique qui permet d'ajuster le pH à la valeur attendue. Par exemple, l'agent régulateur de pH peut augmenter le pH ; c'est le cas des bases, telle que NaOH. Alternativement, l'agent régulateur de pH peut diminuer le pH ; c'est le cas des acides.

Par « agent de coalescence », on entend un agent utilisé dans les peintures qui permet d'abaisser la température minimum de formation du film (TMFF ou MFFT pour Minimum Film Formation Temperature) de peinture à une température adaptée aux conditions d'application souhaitée(s) (par exemple une TMFF de 5°C pour une application à l'extérieur). A titre d'exemple d'agent coalescent selon l'invention, on peut citer le propylène glycol, le butyl glycol, le 2,2,4-triméthyl-1,3-pentanediol monoisobutyrate ou le 2,2,4-triméthyl-1,3-pentanediol diisobutyrate.

Selon un mode de réalisation, les compositions aqueuses de l'invention contiennent de, exprimée en % en poids de chacun de leurs constituants, la somme de ces % étant égale à 100% :
1) 5 % à 45 % d'au moins un polyuréthane selon l'invention,
2) 5 % à 30 % d'au moins un tensio-actif,
3) 25 % à 75 % d'eau,
4) 0 à 5 % d'au moins un additif choisi parmi un biocide, un solvant, un anti-mousse, un régulateur de pH, un agent de coalescence et leurs mélanges.

Un autre objet de la présente invention consiste en l'utilisation desdits polyuréthanes et desdites compositions, comme agents épaississants dans des formulations aqueuses, lesdites formulations étant par exemple choisies parmi des peintures aqueuses, des laques, des vernis, des sauces de couchage papetières, des formulations cosmétiques ou détergentes.

Un autre objet de la présente invention réside dans les formulations aqueuses contenant les épaississants ou polyuréthanes et les compositions selon l'invention, lesdites formulations étant par exemple choisies parmi des peintures aqueuses, des laques, des vernis, des sauces de couchage papetières, des formulations cosmétiques ou détergentes.

Un dernier objet de la présente invention consiste en un procédé de préparation d'un polyuréthane selon l'invention consistant en une condensation de ses différents constituants.

Les exemples qui suivent permettent de mieux comprendre l'invention, sans toutefois en limiter la portée.

### EXEMPLES

### Exemple 1

Cet exemple illustre la fabrication d'une peinture aqueuse, dans laquelle on met en oeuvre un épaississant de l'art antérieur contenant un alkyl phénol ayant 15 atomes de carbone, et un épaississant selon l'invention, dont le groupement R est une chaîne alkyle linéaire ayant 9 atomes de carbone : le groupe hydrophobe correspondant contient donc ici 15 atomes de carbone.

### Essai n° 1

Cet essai illustre l'art antérieur. Il correspond à la mise en oeuvre d'une composition aqueuse à 17,5 % en poids sec d'un polymère contenant des alkyls phénols greffés, qui est l'Acrysol™ SCT-275 commercialisé par la société Dow™.

### Essai n° 2

Cet essai illustre l'art antérieur. Il correspond à la mise en oeuvre d'une composition aqueuse contenant 17,5 % en poids sec d'un polymère constitué de, exprimé en % en poids de chacun de ses monomères :
a) 75 % de polyéthylène glycol de masse moléculaire en poids égale à 10 000 g/mol,
b) 5 % d'isophorone diisocyanate,
c) 15 % en poids d'un monomère de formule HO - (OE)ₙ - R
   où OE est l'oxyde d'éthylène, n est égal à 25 et R est le groupement alkyl phénol ayant 15 atomes de carbone.

### Essai n° 3

Cet essai illustre l'invention. Il correspond à la mise en oeuvre d'une composition aqueuse contenant 17,5 % en poids sec d'un polymère constitué de, exprimé en % en poids de chacun de ses monoméres :
a) 75 % de polyéthylène glycol de masse moléculaire en poids égale à 10 000 g/mol,
b) 5 % d'isophorone diisocyanate,
c) 15 % en poids d'un monomère de formule 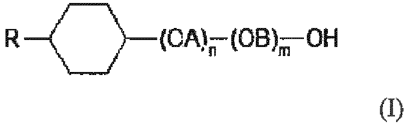 où m = 0 et n = 25 et R désigne le groupe alkyle linéaire ayant 9 atomes de carbone.

Dans chacun des essais n° 1 à 3, on introduit dans un bécher 70,6 grammes de Mowilith™ LDM 1871, 193,8 grammes d'eau bipermutée et 32 grammes de la composition à tester.

On ajuste le pH au moyen d'ammoniaque (28 %) à une valeur comprise entre 8,6 et 8,9. A 25°C, on mesure alors les viscosités Brookfield™ à 10 et 100 tours par minute (µ_{Bk10} et µ_{Bk100}) et Stormer™ (µ_{S}) de la peinture.

Les résultats apparaissent dans le tableau 1.

**Tableau 1**

| Essai n° | 1 | 2 | 3 |
|---|---|---|---|
| Art Antérieur INvention | AA | AA | IN |
| µ_{Bk10} | 13 600 | 12200 | 13 800 |
| µ_{Bk100} | 8 700 | 6800 | 8 850 |
| µ_{S} | 135 | 122 | 139 |

## Revendications

1. Polyuréthanes hydrosolubles résultant de la condensation :
a) d'au moins un polyalkylène glycol,
b) d'au moins un polyisocyanate, et
c) d'au moins un monomère de formule (I) : 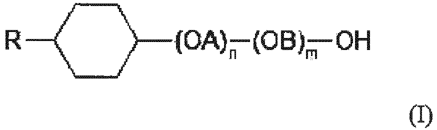 où :
- m et n sont des entiers inférieurs à 150 dont au moins un est non nul,
- A et B désignent des groupes alkyles différents l'un de l'autre, et ayant de 2 à 4 atomes de carbone,
- R désigne un groupement alkyle, linéaire ou ramifié contenant de 8 à 20 atomes de carbone.

2. Polyuréthanes selon la revendication 1, selon lesquels le groupement AO désigne l'oxyde d'éthylène et le groupement BO désigne l'oxyde de propylène.

3. Polyuréthanes selon l'une quelconque des revendications précédentes, selon lesquels R désigne un groupement alkyle linéaire ayant de 9 à 12 atomes de carbone.

4. Polyuréthanes selon l'une quelconque des revendications précédentes, selon lesquels le polylakylène glycol est le polyéthylène glycol.

5. Polyuréthanes selon l'une quelconque des revendications précédentes, **caractérisés en ce que** le polylakylène glycol est un polyéthylène glycol de masse moléculaire en poids comprise entre 2 000 g/mole et 20 000 g/mole.

6. Polyuréthanes selon l'une quelconque des revendications précédentes, **caractérisés en ce que** le polylakylène glycol est un polyéthylène glycol de masse moléculaire en poids comprise entre 8 000 g/mole et 15 000 g/mole.

7. Polyuréthanes selon l'une quelconque des revendications précédentes, **caractérisés en ce que** le polyisocyanate est choisi parmi le toluène diisocyanate et ses dimères et trimères, le 1,4-butane di-isocyanate, le 1,6-hexane diisocyanate, l'isophorone diisocyanate, le 1,3- et le 1,4- cyclohexane diisocyanate, le 4,4'diisocyanatodicyclohexylmethane, le 1-méthyl-2,4-diisocyanatocyclohexane et son mélange avec le 1-méthyl-2,6-diisocyanatocyclohexane, le biuret de l'hexaméthylène diisocyanate et ses dimères et trimères et leurs mélanges.

8. Compositions aqueuses contenant de l'eau, au moins un polyuréthane selon l'une quelconque des revendications 1 à 7, et au moins un tensio-actif.

9. Composition aqueuse selon la revendication 8, contenant en outre un additif choisi parmi un biocide, un solvant, un anti-mousse, un régulateur de pH, un agent de coalescence ou leurs mélanges.

10. Compositions selon la revendication 8 ou 9 **caractérisées en ce qu'**elles contiennent de, exprimée en % en poids de chacun de leurs constituants, la somme de ces % étant égale à 100 % :
1) 5 % à 45 % d'au moins un polyuréthane selon l'une quelconque des revendications 1 à 7 ,
2) 5 % à 30 % d'au moins un tensio-actif,
3) 25 % à 75 % d'eau,
4) 0 à 5 % d'au moins un additif choisi parmi un biocide, un solvant, un anti-mousse, un régulateur de pH, un agent de coalescence ou leurs mélanges.

11. Utilisation des polyuréthanes selon une des revendications 1 à 7, ou une composition selon une des revendications 8 à 10, comme agents épaississants dans des formulations aqueuses.

12. Utilisation selon la revendication 11, selon laquelle lesdites formulations aqueuses sont choisies parmi les peintures aqueuses, les laques, des vernis, les sauces de couchage papetières, les formulations cosmétiques ou les formulations détergentes.

13. Formulations aqueuses contenant les polyuréthanes ou les compositions selon l'une quelconque des revendications 1 à 10, lesdites formulations étant choisies parmi des peintures aqueuses, des laques, des vernis, des sauces de couchage papetières, des formulations cosmétiques ou détergentes.

14. Procédé de préparation d'un polyuréthane selon l'une quelconque des revendications 1 à 7, consistant en une condensation de ses différents constituants.

## Patentansprüche

1. Wasserlösliche Polyurethane aus der Kondensation von:
a) mindestens einem Polyalkylenglykol,
b) mindestens einem Polyisocyanat, und
c) mindestens einem Monomer der Formel (I): 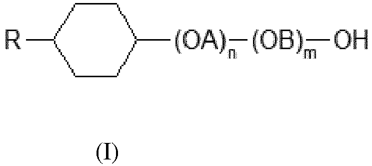 wobei:
- m und n für ganze Zahlen von weniger als 150, von denen mindestens eine nicht null ist, stehen,
- A und B für voneinander verschiedene Alkylgruppen mit 2 bis 4 Kohlenstoffatomen stehen,
- R für eine lineare oder verzweigte Alkylgruppe mit 8 bis 20 Kohlenstoffatomen steht.

2. Polyurethane nach Anspruch 1, wobei die Gruppierung AO für Ethylenoxid steht und die Gruppierung BO für Propylenoxid steht.

3. Polyurethane nach einem der vorhergehenden Ansprüche, wobei R für eine lineare Alkylgruppe mit 9 bis 12 Kohlenstoffatomen steht.

4. Polyurethane nach einem der vorhergehenden Ansprüche, wobei es sich bei dem Polyalkylenglykol um Polyethylenglykol handelt.

5. Polyurethane nach einem der vorhergehenden Ansprüche, **dadurch gekennzeichnet, dass** es sich bei dem Polyalkylenglykol um ein Polyethylenglykol mit einem Molekulargewicht zwischen 2 000 g/mol und 20 000 g/mol handelt.

6. Polyurethane nach einem der vorhergehenden Ansprüche, **dadurch gekennzeichnet, dass** es sich bei dem Polyalkylenglykol um ein Polyethylenglykol mit einem Molekulargewicht zwischen 8 000 g/mol und 15 000 g/mol handelt.

7. Polyurethane nach einem der vorhergehenden Ansprüche, **dadurch gekennzeichnet, dass** das Polyisocyanat aus Toluoldiisocyanat und dessen Dimeren und Trimeren, 1,4-Butandiisocyanat, 1,6-Hexandiisocyanat, Isophorondiisocyanat, 1,3- und 1,4-Cyclohexandiisocyanat, 4,4'-Diisocyanatodicyclohexylmethan, 1-Methyl-2,4-diisocyanatocyclohexan und dessen Mischung mit 1-Methyl-2,6-diisocyanatocyclohexan, dem Biuret von Hexamethylendiisocyanat und dessen Dimeren und Trimeren und Mischungen davon ausgewählt ist.

8. Wässrige Zusammensetzungen, die Wasser, mindestens ein Polyurethan nach einem der Ansprüche 1 bis 7 und mindestens ein Tensid enthalten.

9. Wässrige Zusammensetzung nach Anspruch 8, die außerdem ein Additiv aus der Gruppe bestehend aus einem Biozid, einem Lösungsmittel, einem Antischaummittel, einem pH-Regler, einem Koaleszenzmittel oder Mischungen davon enthält.

10. Zusammensetzungen nach Anspruch 8 oder 9, **dadurch gekennzeichnet, dass** sie, ausgedrückt in Gew.-% jedes ihrer Bestandteile, wobei die Summe dieser %-Anteile gleich 100% ist, Folgendes enthalten:
1) 5% bis 45% mindestens eines Polyurethans nach einem der Ansprüche 1 bis 7,
2) 5% bis 30% mindestens eines Tensids,
3) 25% bis 75% Wasser,
4) 0 bis 5% mindestens eines Additivs, das aus einem Biozid, einem Lösungsmittel, einem Antischaummittel, einem pH-Regler, einem Koaleszenzmittel oder Mischungen davon ausgewählt ist.

11. Verwendung der Polyurethane nach einem der Ansprüche 1 bis 7 oder einer Zusammensetzung nach einem der Ansprüche 8 bis 10 als Verdickungsmittel in wässrigen Formulierungen.

12. Verwendung nach Anspruch 11, wobei die wässrigen Formulierungen aus wässrigen Farben, Lacken, Klarlacken, Papierstreichmassen, kosmetischen Formulierungen oder Wasch- oder Reinigungsformulierungen ausgewählt sind.

13. Wässrige Formulierungen, enthaltend die Polyurethane oder die Zusammensetzungen nach einem der Ansprüche 1 bis 10, wobei die Formulierungen aus wässrigen Farben, Lacken, Klarlacken, Papierstreichmassen, kosmetischen Formulierungen oder Wasch- oder Reinigungsformulierungen ausgewählt sind.

14. Verfahren zur Herstellung eines Polyurethans nach einem der Ansprüche 1 bis 7, bei dem man dessen verschiedene Bestandteile kondensiert.

## Claims

1. Hydrosoluble polyurethanes resulting from the condensation:
a) of at least one polyalkylene glycol,
b) of at least one polyisocyanate, and
c) of at least one monomer of formula (I): 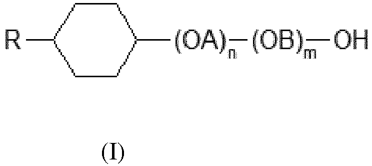 where:
- m and n are integers of less than 150, at least one of which is non-zero,
- A and B designate alkyl groups which are different one from another, and having 2 to 4 carbon atoms,
- R designates an alkyl group, whether linear or branched, containing 8 to 20 carbon atoms.

2. Polyurethanes according to claim 1, according to which the AO group designates ethylene oxide, and the BO group designates propylene oxide.

3. Polyurethanes according to any one of the previous claims, according to which R designates a linear alkyl group having 9 to 12 carbon atoms.

4. Polyurethanes according to any of the previous claims, according to which the polyalkylene glycol is polyethylene glycol.

5. Polyurethanes according to any of the previous claims, **characterised in that** the polyalkylene glycol is a polyethylene glycol of molecular mass by weight of between 2,000 g/mol and 20,000 g/mol.

6. Polyurethanes according to any of the previous claims, **characterised in that** the polyalkylene glycol is a polyethylene glycol of molecular mass by weight of between 8,000 g/mol and 15,000 g/mol.

7. Polyurethanes according to any one of the previous claims, **characterised in that** the polyisocyanate is chosen from among toluene diisocyanate and its dimers and trimers, 1,4-butane diisocyanate, 1,6-hexane diisocyanate, isophorone diisocyanate, 1,3- and 1,4- cyclohexane diisocyanate, 4,4'diisocyanatodicyclohexylmethane, 1-methyl-2,4-diisocyanatocyclohexane and its blend with 1-methyl-2,6-diisocyanatocyclohexane, the biuret of hexamethylene diisocyanate and its dimers and trimers and their blends.

8. Aqueous compositions containing water, at least one polyurethane according to any one of claims 1 to 7, and at least one surfactant.

9. Aqueous composition according to claim 8, also containing an additive chosen from among a biocide, a solvent, an anti-foaming agent, a pH regulator, a coalescence agent or their blends.

10. Compositions according to claim 8 or 9, **characterised in that** they contain, expressed as a % by weight of each of its constituents, where the sum of these %s is equal to 100%:
1) 5% to 45% of at least one polyurethane according to any one of claims 1 to 7,
2) 5% to 30% of at least one surfactant,
3) 25% to 75% of water,
4) 0 to 5% of at least one additive chosen from among a biocide, a solvent, an anti-foaming agent, a pH regulator, a coalescence agent or their blends.

11. Use of the polyurethanes according to one of the claims 1 to 7, or a composition according to one of the claims 8 to 10, as thickening agents in aqueous formulations.

12. Use according to claim 11, according to which the said aqueous formulations are chosen from among aqueous paints, lacquers, varnishes, paper coating colors, cosmetic formulations or detergent formulations.

13. Aqueous formulations containing the polyurethanes or the compositions according to any one of the claims 1 to 10, where the said formulations are chosen from among aqueous paints, lacquers, varnishes, paper coating colors, cosmetic formulations or detergent formulations.

14. Method for preparing a polyurethane according to any one of claims 1 to 7, consisting of a condensation of its different constituents.
